(19) **Europäisches Patentamt / European Patent Office / Office européen des brevets**

(11) **EP 3 643 488 B1**

(12) **EUROPEAN PATENT SPECIFICATION**

(45) Date of publication and mention
of the grant of the patent:
**07.06.2023 Bulletin 2023/23**

(21) Application number: **18819895.6**

(22) Date of filing: **25.04.2018**

(51) International Patent Classification (IPC):
**B29D 30/32** (2006.01)

(52) Cooperative Patent Classification (CPC):
**B29D 30/32;** B29D 2030/3257; B29D 2030/3264

(86) International application number:
**PCT/JP2018/016804**

(87) International publication number:
**WO 2018/235427 (27.12.2018 Gazette 2018/52)**

(54) **TIRE MOLDING DEVICE AND TIRE MANUFACTURING METHOD**

REIFENFORMUNGSVORRICHTUNG UND REIFENHERSTELLUNGSVERFAHREN

DISPOSITIF DE MOULAGE DE PNEUMATIQUE ET MÉTHODE DE FABRICATION DE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2017 JP 2017120007**

(43) Date of publication of application:
**29.04.2020 Bulletin 2020/18**

(73) Proprietor: **Bridgestone Corporation**
**Tokyo 104-8340 (JP)**

(72) Inventor: **IYANAGI Satoshi**
**Tokyo 104-8340 (JP)**

(74) Representative: **Marks & Clerk LLP**
**15 Fetter Lane**
**London EC4A 1BW (GB)**

(56) References cited:
WO-A1-2007/138623    FR-A5- 2 093 180
JP-A- H09 309 159    JP-A- 2006 130 748
JP-A- 2006 130 860    JP-A- 2008 307 849
JP-A- 2008 307 865    JP-A- 2015 066 682

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a tire forming apparatus and a tire manufacturing method.

BACKGROUND

In the manufacturing of a tire, there is a tire-member folding back step in which, on a forming drum, a tire member, such as an unvulcanized carcass ply, is folded back around a bead core from inside to outside in a radial direction of the drum.

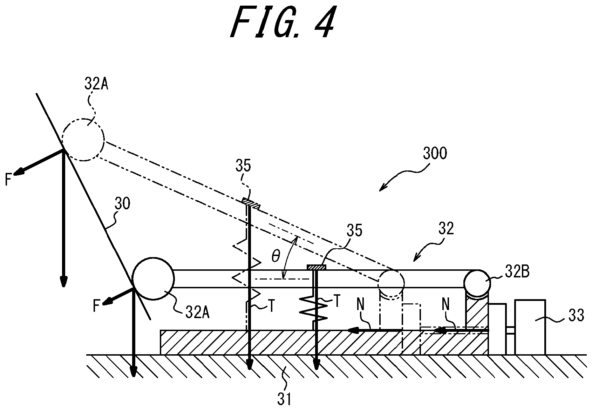

Conventionally, in the tire-member folding back step, a tire forming apparatus 300 may be used, the tire forming apparatus 300 including a drum spindle body 31, a plurality of arms 32 arranged in an annular shape on an outer circumferential side of the drum spindle body 31 (one of the plurality of arms 32 is illustrated in FIG. 4), a spring member such as a rubber band 35 that bundles the arms 32, and arbitrary pushing means 33 that pushes the arms 32 in a direction approaching the tire member, along an axial direction of the drum spindle body 31 as illustrated in FIG. 4 depicting a part of the conventional tire forming apparatus 300.

In the tire forming apparatus 300, when the arm 32 is pushed in the axial direction of the drum spindle body 31 by the pushing means 33 and a front end portion 32A of the arm 32 is pushed against a carcass ply 30 around a bead core (not illustrated) (the state indicated with the solid line in FIG. 4), the arm 32 is moved about a rear end portion 32B of the arm 32 as a fulcrum and opened outward in a radial direction of the drum spindle body 31 while pressing the carcass ply 30 (the state indicated with the broken line in FIG. 4).

At this time, in addition to a press force resulting from a pushing force N from the pushing means 33, a press force resulting from a biasing force T (indicated with a spring symbol in the drawing) due to tension of the rubber band 35 is applied to the carcass ply 30 through the front end portion 32A of the arm 32 (a press force F in the drawing). Since the biasing force T due to tension of the rubber band 35 increases with the opening movement of the arm 32, the press force F to be applied to the carcass ply 30 increases in proportion to an inclination angle $\theta$ of the arm 32 (hereinafter referred to as the "arm angle $\theta$") with respect to the axial direction of the drum spindle body 31.

That is, when the arm 32 pushes an outer zone in the radial direction of the drum spindle body 31 relative to the vicinity of the bead core (for example, the arm angle $\theta$ is 30°) as indicated with the two-dot chain line in FIG. 4, the press force F is larger compared to the press force F, indicated with the solid line in FIG. 4, when the arm 32 pushes the vicinity of the bead core (for example, the arm angle $\theta$ is 0°).

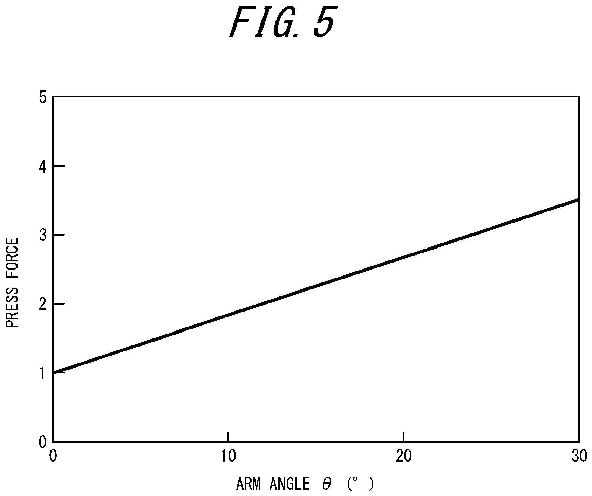

Specifically, as indicated in the graph of FIG. 5, for example, the press force F when the arm angle $\theta$ is 30° is more than twice the press force F when the arm angle $\theta$ is 0°.

In the conventional tire forming apparatus 300, the press force F changes with the opening movement of the arm 32 as described above, and therefore the press force may be insufficient in the vicinity of the bead core and the air may enter between the bead core and the carcass ply 30, and, in some cases, the press force became excessive in the outer zone in the radial direction of the drum spindle body 31 relative to the vicinity of the bead core and caused unevenness defects such as an imprint remaining on an attachment surface of the carcass ply 30.

In order to reduce such folding back defects of the unvulcanized tire member, for example, PTL 1 discloses a technique of arbitrarily adjusting a press force to be applied to a carcass ply by an arm with the use of a carcass ply folding back device having storage means that stores a movement path of a press member capable of applying a predetermined press force, and a controller that controls the movement of the press member according to the movement path stored in the storage means.

CITATION LIST

Patent Literature

PTL 1: Japanese Patent Application Laid-Open No. 2014-177108. Attention is also drawn to the disclosures of WO 2007/138623 and FR 2093180.

SUMMARY

(Technical Problem)

However, there is a demand for adjusting the press force with respect to the unvulcanized tire member according to a tire position by simpler means, and thereby reducing folding back defects of the tire member.

Hence, it is an object of the present disclosure to provide a tire forming apparatus and a tire manufacturing method that are capable of reducing folding back defects of an unvulcanized tire member by simple means.

(Solution to Problem)

In order to solve the above problem, a tire forming apparatus of the present invention is as claimed in claim 1.

According to this configuration, folding back defects of the unvulcanized tire member can be reduced by simple means.

In the present description, the "drum spindle body" means a component member that is a counterpart of relative movement of the arm along the axial direction. Hence, the "drum spindle body" includes not only a so-called drum spindle in the tire forming apparatus, but also other component members such as, for example, a bead lock mechanism, provided on the outer circumferential side of the drum spindle.

The "connecting portion connected to the drum spindle body" includes, of course, the case where the connecting portion is directly connected to the drum spindle body, and also includes the case where the connecting portion is indirectly connected to the drum spindle body through other component member.

Furthermore, in the present description, the "extending direction of the arm" refers to a direction along a line segment connecting the slidable contact portion and the press portion of the arm.

(Advantageous Effect)

According to the present disclosure, it is possible to provide a tire forming apparatus and a tire manufacturing method that are capable of reducing folding back defects of an unvulcanized tire member by simple means.

BRIEF DESCRIPTION OF THE DRAWINGS

In the accompanying drawings:

FIG. 1A is a schematic diagram depicting a part of a tire forming apparatus according to one embodiment of the present disclosure, and a view illustrating a state in which the arm angle θ is 0°;
FIG. 1B is a schematic diagram depicting a part of the tire forming apparatus according to one embodiment of the present disclosure, and a view illustrating a state in which the arm angle θ is 30°;
FIG. 2 is a graph indicating the press force of the tire forming apparatus of FIG. 1;
FIG. 3A is a schematic diagram depicting a part of a tire forming apparatus according to another embodiment of the present disclosure, and a view illustrating a state in which the arm angle θ is 0°;
FIG. 3B is a schematic diagram depicting a part of the tire forming apparatus according to another embodiment of the present disclosure, and a view illustrating a state in which the arm angle θ is 30°;
FIG. 4 is a schematic diagram depicting a part of a conventional tire forming apparatus, and a view illustrating a state in which the arm angle θ is 0°, with the solid line, and a state in which the arm angle θ is 30°, with the two-dot chain line; and
FIG. 5 is a graph indicating the press force of the tire forming apparatus of FIG. 4.

DETAILED DESCRIPTION

Hereinafter, an embodiment of a tire according to the present disclosure will be described with reference to the drawings.

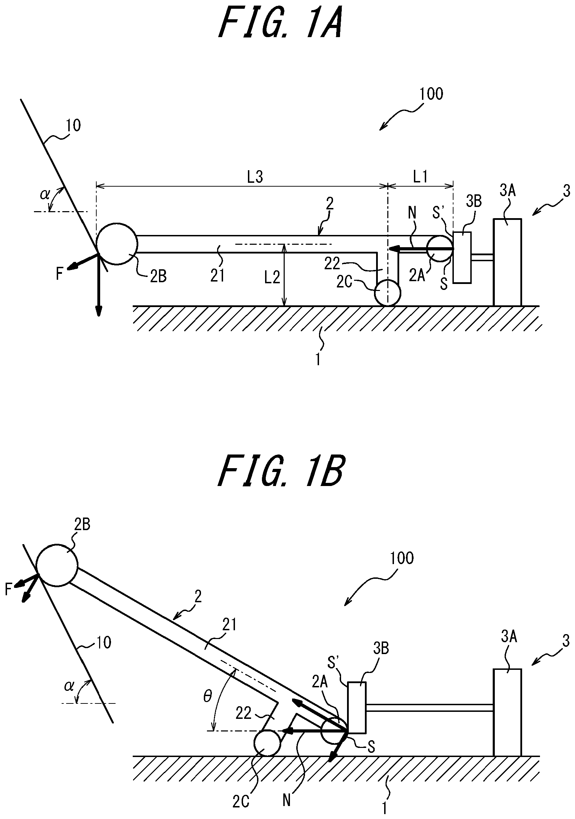

As illustrated in FIG. 1A, a tire forming apparatus 100 according to the present embodiment includes: a drum spindle body 1; a plurality of arms 2 arranged, at approximately equal intervals in the present embodiment though not illustrated, in an annular shape on an outer circumferential side of the drum spindle body 1; and pushing means 3 that presses the plurality of arms 2 in a direction approaching an unvulcanized tire member (an unvulcanized tire carcass ply 10 in the present embodiment) along an axial direction of the drum spindle body 1. Here, for the purpose of explanation, structures of one of the plurality of arms 2 and the vicinity are illustrated.

The arm 2 is arranged between the unvulcanized carcass ply 10 and the pushing means 3 in the axial direction of the drum spindle body 1. The arm 2 includes: a slidable contact portion 2A which is provided on one end side of the arm 2 and slidably contacts the pushing means 3; a press portion 2B which is provided on the other end side of the arm 2, and comes into contact with the carcass ply 10 and presses the carcass ply 10; and a connecting portion 2C which is in between the slidable contact portion 2A and the press portion 2B in an extending direction of the arm 2 and is connected to the drum spindle body 1, on the drum spindle body 1 side with respect to a line segment connecting the slidable contact portion 2A and the press portion 2B.

The arm 2 in the present embodiment has an arm main body portion 21 that couples the slidable contact portion 2A and the press portion 2B together, and an arm branch portion 22 that couples the arm main body portion 21 and the connecting portion 2C together, both of the arm main body portion 21 and the arm branch portion 22 extending linearly. The arm 2 as a whole is formed integrally so that the arm branch portion 22 is orthogonal to the arm main body portion 21.

The pushing means 3 in the present embodiment includes, for example, a driving source 3A such as a motor and a cylinder, and a pushing portion 3B which has a corresponding slidable contact surface S' to be subject to slide contact with arm 2, and is to be biased in the axial direction of the drum spindle body 1 by the driving source 3A.

In the present embodiment, a plurality of pushing means 3 corresponding to the arms 2, respectively, are arranged, but the pushing means 3 may be configured to be capable of pushing all together the plurality of arms 2 arranged in an annular shape.

In the above-described configuration, when the arm 2 is pushed by the pushing means 3 in the axial direction of the drum spindle body 1, at the position of the slidable contact portion 2A provided on one end side of the arm 2, and then the press portion 2B provided on the other end side of the arm 2 is pushed against the carcass ply 10 in the vicinity of a bead core (the state illustrated in FIG. 1A), the arm 2 is moved about the connecting portion 2C as a fulcrum and opened outward in a radial direction of the drum spindle body 1 due to moment toward the outside in the radial direction of the drum spindle body 1 while pressing the carcass ply 10 (the state illustrated in FIG. 1B). That is, in the arm 2, the slidable contact portion 2A approaches the drum spindle body 1, on one side in the axial direction of the drum spindle body 1, through the connecting portion 2C serving as a fulcrum, and the press portion 2B is moved and opened to be distant from the drum spindle body 1 on the other side in the axial direction of the drum spindle body 1.

At this time, the slidable contact portion 2A of the arm 2 moves in a sliding contact manner on the corresponding slidable contact surface S ' of the pushing means 3 (the pushing portion 3B of the pushing means 3 in the present embodiment) from the outside to the inside in the radial direction of the drum spindle body 1 while receiving a pushing force N in the axial direction of the drum spindle body 1 from the pushing means 3 (a counter force from the pushing portion 3B of the pushing means 3 in the present embodiment). That is, during the opening movement of the arm main body portion 21, the slidable contact portion 2A moves relative to the pushing means 3 while being in contact with the corresponding slidable contact surface S' of the pushing means 3.

Also, at this time, the press portion 2B of the arm 2 moves on the carcass ply 10 from the inside to the outside in the radial direction of the drum spindle body 1 while pressing the carcass ply 10 with a press force F in a direction perpendicular to an extending direction of the carcass ply 10, and folds back and crimps the carcass ply 10.

Furthermore, at this time, the connecting portion 2C of the arm 2 moves in a sliding contact manner, on the drum spindle body 1 in the present embodiment, along the axial direction of the drum spindle body 1 due to the pushing force N in the axial direction of the drum spindle body 1 from the pushing means 3. That is, during the opening movement of the arm main body portion 21, the connecting portion 2C moves relative to the drum spindle body 1 while being in contact with the drum spindle body 1 in the present embodiment.

As described above, the arm 2 in the present embodiment is moved and opened by receiving the moment toward the outside in the radial direction of the drum spindle body 1, but the slidable contact portion 2A, the press portion 2B and the connecting portion 2C of the arm 2 have the above-described positional relationship and the slidable contact portion 2A moves in a sliding contact manner on the corresponding slidable contact surface S ' of the pushing means 3 from the outside to the inside in the radial direction of the drum spindle body 1, and, therefore, when the arm angle $\theta$ increases with the opening movement of the arm 2, the pushing force N applied along the axial direction of the drum spindle body 1 has a larger component in a direction perpendicular to the extending direction of the arm main body portion 21 (in an extending direction of the arm branch portion 22 in the present embodiment). As a result, the press force F resulting from the component (and gravity (not illustrated) applied to the arm 2) decreases.

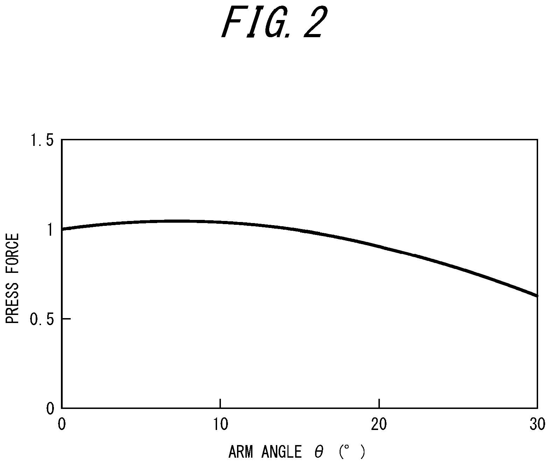

Thus, in the tire forming apparatus 100 according to the present embodiment, as indicated in the graph of FIG. 2, the press force F decreases as the arm angle $\theta$ increases. Specifically, for example, the press force F when the arm angle $\theta$ is 30° is about 60% of the press force F when the arm angle $\theta$ is 0°. Hence, in the tire forming apparatus 100, the press force F with respect to the unvulcanized carcass ply 10 can be suitably increased or decreased, according to the arm angle $\theta$, based on a constant pushing force N.

Therefore, in the tire forming apparatus 100 according to the present embodiment, it is possible to more suitably adjust the press force F in the vicinity of the bead core where a relatively large press force is required from the viewpoint of reducing the air entering between unvulcanized tire members, or the like and in the outer zone in the radial direction of the drum spindle body 1 relative to the vicinity of the bead core where a relatively small press force is desired from the viewpoint of reducing unevenness defects on an attachment surface of the unvulcanized tire member, by the above-described compact configuration. Consequently, folding back defects of the unvulcanized tire member can be reduced by simple means.

The press force F is represented by Formula (1) below.

In Formula (1) below, N is the pushing force of the pushing means 3, F is the press force of the arm 2, L1 is the length between an end of the arm 2 on the pushing means 3 side and the center of the connecting portion 2C in the arm extending direction, L2 is the length between the line segment connecting the slidable contact portion 2A and press portion 2B and the end of the connecting portion 2C in a direction perpendicular to the arm extending direction, L3 is the length between the end of the press portion 2B of the arm 2 and the center of the connecting portion 2C in the arm extending direction, $\alpha$ is an inclination angle of the carcass ply 10 with respect to the axial direction of the drum spindle body 1, and $\theta$ is an inclination angle of the arm 2 (arm angle) with respect to the axial direction of the drum spindle body 1 ($\theta < \alpha < 90°$).

[Expression 1]

$$F = \frac{N}{L_3}(L_2 \cos\theta - L_1 \sin\theta)\cos(\alpha - \theta) \qquad \dots \text{Formula (1)}$$

From Formula (1) above, it can be understood that, in the tire forming apparatus 100 according to the present embodiment, the press force F with respect to the carcass ply 10 decreases as the arm angle $\theta$ increases. Moreover, the decreasing ratio of the press force F due to an increase in the arm angle $\theta$ can be adjusted by increasing the length L1 between the end of the arm 2 on the pushing means 3 side and the center of the connecting portion 2C in the arm extending direction. That is, the longer the length L1, the greater the decreasing ratio of the press force F due to an increase in the arm angle $\theta$.

Whereas, in the conventional tire forming apparatus 300, the arm 32 receives the biasing force T due to tension of the rubber band 35, and the biasing force T increases as the arm angle $\theta$ increases, and accordingly the press force F also increases as the arm angle $\theta$ increases. The arm 32 is moved and opened without moving the rear end portion 32B of the arm 32 in a sliding contact manner on the pushing means 33, and, therefore, when the arm angle $\theta$ of the arm 32 reaches or exceeds a certain value, the front end portion 32A of the arm 32 jumps upward in the drawing if there is no tension T of the rubber band 35, and the press force F with respect to the unvulcanized tire member 30 decreases extremely. In this case, the outside in a tire radial direction of a green tire cannot be appropriately formed.

In the tire forming apparatus 100 according to the present disclosure, the pushing force N from the pushing means 3 is directly applied to the slidable contact portion 2A of the arm 2, and the slidable contact portion 2A moves in a sliding contact manner in a tire radial direction on the pushing means 3, and therefore it is possible to apply an appropriate press force to the unvulcanized tire member 10 across the tire radial direction.

In the tire forming apparatus 100 according to the present embodiment, the arm 2 has the arm main body portion 21 that couples the slidable contact portion 2A and the press portion 2B together, and the arm branch portion 22 that couples the arm main body portion 21 and the connecting portion 2C together, and both of the arm main body portion 21 and the arm branch portion 22 extend linearly as described above, and thus the tire forming apparatus is compactly configured.

However, it is possible to arbitrarily and integrally couple the slidable contact portion 2A, the press portion 2B and the connecting portion 2C together as long as the connecting portion 2C is in between the slidable contact portion 2A and the press portion 2B in the extending direction of the arm 2 and is connected to the drum spindle body 1, on the drum spindle body 1 side with respect to the line segment connecting the slidable contact portion 2A and the press portion 2B.

For example, the slidable contact portion 2A and the press portion 2B can be coupled in a curved shape (the arm main body portion 21 is in a curved shape), the arm main body portion 21 and the connecting portion 2C can be coupled in a curved shape (the arm branch portion 22 is in a curved shape), or the slidable contact portion 2A and the press portion 2B can be integrally connected through the connecting portion 2C.

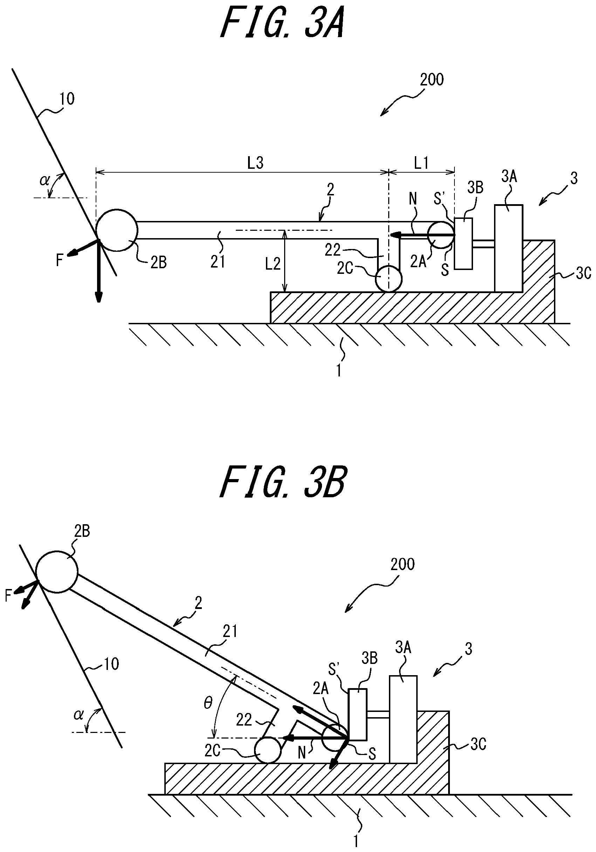

In addition, as illustrated with a tire molding apparatus 200 according to another embodiment of the present disclosure in FIG. 3, the arm 2 can also be connected indirectly to the drum spindle body 1 through other component member, for example, an arm support body 3C, arranged between the arm 2 and the drum spindle body 1.

The tire forming apparatus 200 has the same configuration as the above-described tire forming apparatus 100, except being provided with the arm support body 3C.

For example, with a ball screw (not illustrated) extending along the axial direction of the drum spindle body 1, the arm support body 3C can slide on the drum spindle body 1 along the axial direction, support the arm 2 by being interposed between the arm 2 and the drum spindle body 1, and also push the arm 2 in a direction approaching an unvulcanized tire member (the unvulcanized carcass ply 10 in the present embodiment) along the axial direction of the drum spindle body 1. In the tire forming apparatus 200, the driving portion 3A, the pushing portion 3B and the arm support body 3C constitute the pushing means 3.

Thus, in the case where the arm 2 is connected to the drum spindle body 1 through the arm support body 3C, for example, if the arm support body 3C is configured to be rotatable in a circumferential direction of the drum spindle body 1, it is possible to rotate the arm 2 in the circumferential direction of the drum spindle body 1.

Moreover, during a period from a state in which the arm 2 is distant from the carcass ply 10 until the press portion 2B of the arm 2 comes into contact with the carcass ply 10 in the vicinity of the bead core (the state illustrated in FIG. 3A) and a period when the arm 2 is moved and opened outward in the radial direction of the drum spindle body 1 while pressing the carcass ply 10 (the state illustrated in FIG. 3B), the arm 2 can be moved closer to the carcass ply 10 and pressed against the carcass ply 10 without moving the connecting portion 2C in a sliding contact manner on other component such as the drum spindle body 1.

As described above, in the tire forming apparatuses 100, 200, the press force F with respect to the unvulcanized tire member (the unvulcanized carcass ply 10 in the above-described embodiments) can be suitably increased or decreased, according to the arm angle θ, based on a constant pushing force N. Moreover, by controlling the pushing force N of the pushing means 3 itself, it is possible to more suitably increase or decrease the press force F, according to the press position of the unvulcanized carcass ply 10.

The slidable contact surface S of the slidable contact portion 2A of the arm 2 with respect to the pushing means 3 (the slidable contact surface with respect to the pushing portion 3B in the present embodiment) is preferably made of a curved surface (for example, a semi-circular curved surface) protruding toward the pushing means 3. In this case, since the slidable contact portion 2A can easily slide on the corresponding slidable contact surface S ' of the pushing means 3, the arm 2 can be more smoothly moved and opened.

Furthermore, if the slidable contact portion 2A of the arm 2 is formed of a rotatable roller, the slidable contact portion 2A can more easily slide on the corresponding slidable contact surface S' of the pushing means 3 (the corresponding slidable contact surface of the pushing portion 3B in the present embodiment). In this case, the arm main body portion 21 is configured to be capable of being turned around the slidable contact portion 2A.

The slidable contact portion 2A of the arm 2 can be improved in slidability by plating or nitriding the slidable contact surface S of the slidable contact portion 2A. As the plating, for example, hard chrome plating can be used.

The press portion 2B of the arm 2 can be formed, for example, with one, two, three or more rotatable rollers.

The connecting portion 2C of the arm 2 can be formed of, for example, a rotatable roller or a hinge body. In this case, the arm branch portion 22 is configured to be capable of being turned around a central axis of the connecting portion 2C.

The corresponding slidable contact surface S' of the pushing means 3 in the above-described embodiment (the pushing portion 3B of the pushing means 3 in the above-described embodiment) is formed to be perpendicular to the drum spindle body 1, but, for example, can be formed to be inclined with respect to the drum spindle body 1, or can be formed of a curved line connecting one, two or a plurality of circular arcs.

Thus, by inclining and/or bending the corresponding slidable contact surface S' of the pushing portion 3B with respect to the axial direction of the drum spindle body 1, displacement of thrust due to the pushing means 3 can be adjusted.

In the case where the corresponding slidable contact surface S' is inclined with respect to the drum spindle body 1, for example, it is advantageous to incline the corresponding slidable contact surface S' to have an acute angle between the corresponding slidable contact surface S' and the drum spindle body 1 on the pushing means 3 side in order to decrease the press force F with respect to the unvulcanized tire member (the unvulcanized carcass ply 10 in the present embodiment) according to an increase in the arm angle θ.

According to a tire manufacturing method of forming a tire using the tire forming apparatus 100, 200 described above, folding back defects of an unvulcanized tire member can be reduced.

REFERENCE SIGNS LIST

| | |
|---|---|
| 1, 31 | Drum spindle body |
| 2, 32 | Arm |
| 2A | Slidable contact portion |
| 2B | Press portion |
| 2C | Connecting portion |
| 21 | Arm main body portion |
| 22 | Arm branch portion |
| 3, 33 | Pushing means |
| 3A | Driving source |
| 3B | Pushing portion |
| 3C | Arm support body |
| 10, 30 | Unvulcanized carcass ply (unvulcanized tire member) |
| 32A | Front end portion |
| 32B | Rear end portion |
| 35 | Rubber band |

100, 300    Tire forming apparatus
S           Slidable contact surface
S'          Corresponding slidable contact surface

**Claims**

1. A tire forming apparatus comprising: a drum spindle body (1, 31); a plurality of arms (2, 32) arranged in an annular shape on an outer circumferential side of the drum spindle body (1, 31); and pushing means (3, 33) configured to push the arms (2, 32) in a direction approaching an unvulcanized tire member (10, 30), along an axial direction of the drum spindle body (1, 31), wherein
each of the arms (2, 32) includes:

   a slidable contact portion (2A) provided on one end side of the arm (2, 32) and configured to slidably contact the pushing means (3, 33);
   a press portion (2B) provided on an other end side of the arm (2, 32) and configured to come into contact with the unvulcanized tire member (10, 30) and press the unvulcanized tire member (10, 30); and **characterised by**
   a connecting portion (2C) provided between the slidable contact portion (2A) and the press portion (2B) in an extending direction of the arm (2, 32) and connected to the drum spindle body (1, 31), on the drum spindle body side with respect to a line segment connecting the slidable contact portion and the press portion, wherein:
   the slidable contact portion (2A) moves in a sliding contact manner on a corresponding slidable contact surface (S) of the pushing means (3, 33) from the outside to the inside in the radial direction of the drum spindle body (1, 31) while receiving a pushing force in the axial direction of the drum spindle body (1, 31) from the corresponding slidable contact surface (S') of the pushing means (3, 33), thereby an inclination angle of the arm (2, 32) with respect to the axial direction of the drum spindle body (1, 31) increases.

2. The tire forming apparatus according to claim 1, wherein each of the arms (2, 32) includes an arm main body portion (21) that couples the slidable contact portion (2A) and the press portion (2B) together, and an arm branch portion (22) that couples the arm main body portion (21) and the connecting portion (2C) together.

3. The tire forming apparatus according to claim 1 or 2, wherein a slidable contact surface (S) of the slidable contact portion (2A) with respect to the pushing means (3, 33) is made of a curved surface protruding toward the pushing means (3, 33).

4. The tire forming apparatus according to any one of claims 1 to 3, wherein

   the slidable contact portion (2A) receives the pushing force in the axial direction of the drum spindle body (1, 31) from the corresponding slidable contact surface (S') of the pushing means (3, 33), thereby the connecting portion (2C) of the arm (2, 32) moves in a sliding contact manner on the drum spindle body (1, 31) or on an arm support body (3C) slidable on the drum spindle body (1, 31) along the axial direction of the drum spindle body (1, 31),
   the slidable contact portion (2A) receives the pushing force in the axial direction of the drum spindle body (1, 31) from the corresponding slidable contact surface (S') of the pushing means (3, 33), thereby the arm (2, 32) is moved about the connecting portion (2C) as a fulcrum and opened outward in a radial direction of the drum spindle body (1, 31) so that the slidable contact portion (2A) approaches the drum spindle body (1, 31) on one side in the axial direction of the drum spindle body (1, 31) and the press portion (2B) is moved and opened to be distant from the drum spindle body (1, 31) on the other side in the axial direction of the drum spindle body (1,31), and by the turning of the arm (2, 32) around the connecting portion (2C), the slidable contact portion (2A) moves in a sliding contact manner on a corresponding slidable contact surface (S') of the pushing means (3, 33) from the outside to the inside in the radial direction of the drum spindle body (1, 31).

5. A tire manufacturing method for forming a tire using the tire forming apparatus according to any one of claims 1 to 4.

**Patentansprüche**

1. Reifenformungsvorrichtung, die Folgendes umfasst: einen Trommelspindelkörper (1, 31), eine Vielzahl von Armen (2, 32), die in einer ringförmigen Gestalt auf einer Außenumfangsseite des Trommelspindelkörpers (1, 31) angeordnet sind, und Schubmittel (3, 33), die dafür konfiguriert sind, die Arme (2, 32) in einer Richtung, die sich einem nicht-vulkanisierten Reifenelement (10, 30) annähert, entlang einer Axialrichtung des Trommelspindelkörpers (1, 31) zu schieben, wobei

jeder der Arme (2, 32) Folgendes einschließt:

einen verschiebbaren Kontaktabschnitt (2A), der auf einer Endseite des Arms (2, 32) bereitgestellt ist und dafür konfiguriert ist, die Schubmittel (3, 33) verschiebbar zu berühren;

einen Pressabschnitt (2B), der auf einer anderen Endseite des Arms (2, 32) bereitgestellt ist und dafür konfiguriert ist, in Berührung mit dem nicht-vulkanisierten Reifenelement (10, 30) zu kommen und das nicht-vulkanisierte Reifenelement (10, 30) zu pressen, und **gekennzeichnet durch**

einen Verbindungsabschnitt (2C), der zwischen dem verschiebbaren Kontaktabschnitt (2A) und dem Pressabschnitt (2B) in einer Ausdehnungsrichtung des Arms (2, 32) bereitgestellt ist und mit dem Trommelspindelkörper (1, 31) verbunden ist, auf der Trommelspindelkörperseite in Bezug auf eine Strecke, die den verschiebbaren Kontaktabschnitt und den Pressabschnitt verbindet, wobei:

sich der verschiebbare Kontaktabschnitt (2A) auf eine Gleitkontaktweise auf einer entsprechenden verschiebbaren Kontaktfläche (S) der Schubmittel (3, 33) von außen nach innen in der Radialrichtung des Trommelspindelkörpers (1, 31) bewegt, während er eine Schubkraft in der Axialrichtung des Trommelspindelkörpers (1, 31) von der entsprechenden verschiebbaren Kontaktfläche (S') der Schubmittel (3, 33) aufnimmt, wodurch ein Neigungswinkel des Arms (2, 32) in Bezug auf die Axialrichtung des Trommelspindelkörpers (1, 31) zunimmt.

2. Reifenformungsvorrichtung nach Anspruch 1, wobei jeder der Arme (2, 32) einen Armhauptkörperabschnitt (21), der den verschiebbaren Kontaktabschnitt (2A) und den Pressabschnitt (2B) aneinander koppelt, und einen Armzweigabschnitt (22), der den Armhauptkörperabschnitt (21) und den Verbindungsabschnitt (2C) aneinander koppelt, einschließt.

3. Reifenformungsvorrichtung nach Anspruch 1 oder 2, wobei eine verschiebbare Kontaktfläche (S) des verschiebbaren Kontaktabschnitts (2A) in Bezug auf die Schubmittel (3, 33) aus einer gekrümmten Fläche hergestellt ist, die zu den Schubmitteln (3, 33) hin vorspringt.

4. Reifenformungsvorrichtung nach einem der Ansprüche 1 bis 3, wobei

der verschiebbare Kontaktabschnitt (2A) die Schubkraft in der Axialrichtung des Trommelspindelkörpers (1, 31) von der entsprechenden verschiebbaren Kontaktfläche (S') der Schubmittel (3, 33) aufnimmt, wodurch sich der Verbindungsabschnitt (2C) des Arms (2, 32) auf eine Gleitkontaktweise auf dem Trommelspindelkörper (1, 31) oder auf einem Armstützkörper (3C), der auf dem Trommelspindelkörper (1, 31) verschiebbar ist, entlang der Axialrichtung des Trommelspindelkörpers (1, 31) bewegt,

der verschiebbare Kontaktabschnitt (2A) die Schubkraft in der Axialrichtung des Trommelspindelkörpers (1, 31) von der entsprechenden verschiebbaren Kontaktfläche (S') der Schubmittel (3, 33) aufnimmt, wodurch der Arm (2, 32) um den Verbindungsabschnitt (2C) als Drehpunkt bewegt und in einer Radialrichtung des Trommelspindelkörpers (1, 31) nach außen geöffnet wird, so dass sich der verschiebbare Kontaktabschnitt (2A) auf einer Seite in der Axialrichtung des Trommelspindelkörpers (1, 31) dem Trommelspindelkörper (1, 31) annähert und der Pressabschnitt (2B) bewegt und geöffnet wird, um von dem Trommelspindelkörper (1, 31) auf der anderen Seite in der Axialrichtung des Trommelspindelkörpers (1, 31) entfernt zu sein, und

durch das Drehen des Arms (2, 32) um den Verbindungsabschnitt (2C) sich der verschiebbare Kontaktabschnitt (2A) auf eine Gleitkontaktweise auf einer entsprechenden verschiebbaren Kontaktfläche (S') der Schubmittel (3, 33) von außen nach innen in der Radialrichtung des Trommelspindelkörpers (1, 31) bewegt.

5. Reifenherstellungsverfahren zum Formen eines Reifens unter Verwendung der Reifenformungsvorrichtung nach einem der Ansprüche 1 bis 4.

## Revendications

1. Appareil de formation de pneumatique, comprenant : un corps de broche à tambour (1, 31), une pluralité de bras (2, 32) agencés en une forme annulaire sur un côté circonférentiel externe du corps de la broche à tambour (1, 31), et des moyens poussoirs (3, 33) configurés pour pousser les bras (2, 32) dans une direction se rapprochant d'un élément de pneumatique non vulcanisé (1, 30), le long d'une direction axiale du corps de la broche à tambour (1, 31), dans lequel :

chacun des bras (2, 32) inclut :

une partie de contact coulissante (2A) fournie sur un côté d'extrémité du bras (2, 32) et configurée pour contacter de manière coulissante les moyens poussoirs (3, 33) ;

une partie de pression (2B) fournie sur un autre côté d'extrémité du bras (2, 32) et configurée pour entrer en contact avec l'élément de pneumatique non vulcanisé (10, 30) et pour presser l'élément de pneumatique non vulcanisé (10, 30), et **caractérisé par**

une partie de connexion (2C) fournie entre la partie de contact coulissante (2A) et la partie de pression (2B), dans une direction d'extension du bras (2, 32), et connectée au corps de la broche à tambour (1, 31), sur le côté du corps de la broche à tambour par rapport à un segment de ligne connectant la partie de contact coulissante et la partie de pression, dans lequel :

la partie de contact coulissante (2A) se déplace d'une manière par contact coulissant sur une surface de contact coulissante correspondante (S) des moyens poussoirs (3, 33), de l'extérieur vers l'intérieur, dans la direction radiale du corps de la broche à tambour (1, 31), tout en recevant une force de poussée dans la direction axiale du corps de la broche à tambour (1, 31) depuis la surface de contact coulissante correspondante (S') des moyens poussoirs (3, 33), entraînant ainsi un accroissement d'un angle d'inclinaison du bras (2, 32) par rapport à la direction axiale du corps de la broche à tambour (1, 31).

2. Appareil de formation d'un pneumatique selon la revendication 1, dans lequel chacun des bras (2, 32) inclut une partie de corps principal du bras (21) accouplant la partie de contact coulissante (2A) et la partie de pression (2B) l'une à l'autre, et une partie de dérivation de bras (22) accouplant la partie de corps principal du bras (21) et la partie de connexion (2C) l'une à l'autre.

3. Appareil de formation d'un pneumatique selon les revendications 1 ou 2, dans lequel une surface de contact coulissante (S) de la partie de contact coulissante (2A) par rapport aux moyens poussoirs (3, 33) est constituée par une surface courbée faisant saillie vers les moyens poussoirs (3, 33).

4. Appareil de formation d'un pneumatique selon l'une quelconque des revendications 1 à 3, dans lequel

la partie de contact coulissante (2A) reçoit la force de poussée dans la direction axiale du corps de la broche à tambour (1, 31) depuis la surface de contact coulissante correspondante (S') des moyens poussoirs (3, 33), entraînant ainsi le déplacement de la partie de connexion (2C) du bras (2, 32) d'une manière par contact coulissant sur le corps de la broche à tambour (1, 31) ou sur un corps de support de bras (3C) pouvant coulisser sur le corps de la broche à tambour (1, 31) le long d'une direction axiale du corps de la broche à tambour (1, 31),

la partie de contact coulissante (2A) reçoit la force de poussée dans la direction axiale du corps de la broche à tambour (1, 31) depuis la surface de contact coulissante correspondante (S') des moyens poussoirs (3, 33), entraînant ainsi le déplacement du bras (2, 32) autour de la partie de connexion (2C) en tant que point d'appui et son ouverture vers l'extérieur, dans une direction radiale du corps de la broche à tambour (1, 31), de sorte que la partie de contact coulissante (2A) se rapproche du corps de la broche à tambour (1, 31) sur un côté, dans la direction axiale du corps de la broche à tambour (1, 31), et que la partie de pression (2B) est déplacée et ouverte de sorte à s'écarter du corps de la broche à tambour (1, 31) sur l'autre côté dans la direction axiale du corps de la broche à tambour (1, 31), et

par suite de la rotation du bras (2, 32) autour de la partie de connexion (2C), la partie de contact coulissante (2A) se déplace d'une manière par contact coulissant sur une surface de contact coulissante correspondante (S') des moyens poussoirs (3, 33), de l'extérieur vers l'intérieur, dans la direction radiale du corps de la broche à tambour (1, 31).

5. Procédé de fabrication de pneumatique pour former un pneumatique en utilisant l'appareil de formation du pneumatique selon l'une quelconque des revendications 1 à 4.

# FIG. 1A

# FIG. 1B

# FIG. 2

# FIG. 3A

# FIG. 3B

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014177108 A
- WO 2007138623 A
- FR 2093180